# EUROPEAN PATENT APPLICATION

(11) **EP 4 194 410 A1**
(43) Date of publication of application: **14.06.2023**
(21) Application number: 22212463.8
(22) Date of filing: 09.12.2022
(51) Int. Cl.: C02F 1/72, C02F 1/30, G21F 9/06, C02F 101/30, C02F 101/34, C02F 1/469

(54) **METHOD FOR TREATING DECONTAMINATION WASTE LIQUID USING DINITROGEN TETROXIDE**

(30) Priority: 13.12.2021 KR 20210177936
(71) Applicant: Korea Atomic Energy Research Institute, Daejeon 34057 (KR)
(72) Inventor: LIM, Seung Joo, 56204 JEOLLABUK-DO (KR); KIM, Seon Byeong, 34033 DAEJEON (KR); CHOI, Wang Kyu, 34083 DAEJEON (KR); PARK, Sang Yoon, Chungcheongnam-do (KR)
(74) Representative: Regimbeau

(57) **Abstract**

The present disclosure relates to a method for treating a decontamination waste liquid comprising non-degradable organic materials. The method includes irradiating ionizing radiation such as electron beams on a decontamination waste liquid in the presence of dinitrogen tetroxide and a semiconductor such as titanium dioxide.

## Description

### [Technical Field]

The present disclosure relates to a technique for treating a waste liquid containing non-degradable organic materials, and in particular, to a technique of treating a radioactive waste liquid containing organic materials such as an organic decontamination agent generated in nuclear power plants, nuclear facilities, radiation (radioactivity) utilization facilities and the like.

### [Background Art]

In nuclear power plants, nuclear energy-related facilities, medical institutions and the like, non-degradable organic materials are generated by solvents and solutes for measuring a liquid scintillation counter, the use of chemical decontamination agents, medical remedies and the like.

Chemical decontamination means removing radioactive material from equipment, installations or the like contaminated with radioactive material using a chemical decontamination agent, and as the chemical decontamination agent mainly used in nuclear facilities, EDTA, organic acids or the like are used. Wastewater including non-degradable organic compounds is generated through chemical decontamination, and when a radioactive waste liquid is treated, non-degradable organic compounds such as an organic decontamination agent present in a decontamination waste liquid as above cause problems of reducing performance of a purification system used in the treatment process, and making the treatment more difficult by reacting with metallic radioactive waste generated in other processes. In addition, when storing a decontamination waste liquid including non-degradable organic compounds in a drum, the non-degradable organic compounds and an oxidizing agent react to increase a pressure inside the drum causing the risk of explosion, and an evaporation concentration method, one of the methods for treating radioactive waste such as a decontamination waste liquid, may release environmental hormone such as dioxin when non-degradable organic compounds are included in the waste subject to treatment, and therefore, the methods as above may also cause problems not suitable for the treatment of a decontamination waste liquid.

Accordingly, techniques for treating non-degradable organic compounds included in a decontamination waste liquid using a proper method have been required, and although an inorganic acid-based chemical decontamination technique has been developed recently, an example of actually using an inorganic acid decontamination agent has not been reported. Accordingly, organic acid-based decontamination agents have been used so far in domestic nuclear power plant sites, and most of the used organic acid-based decontamination techniques rely on an oxalic acid-oriented HP-CORD technique and a UV/hydrogen peroxide process for treating oxalic acid, which are techniques commercialized in foreign countries. A technique of treating an organic acid-based decontamination waste liquid developed by AREVA S.A. of France is a technique of producing hydroxyl radicals with ultraviolet rays and chemicals such as hydrogen peroxide and decomposing oxalic acid, a decontamination agent, and has been most commonly used so far.

However, since these techniques use UV having a high energy level, the range of ultraviolet ray irradiation for producing hydroxyl radicals is very short, and problems of requiring large amounts of UV device and hydrogen peroxide and requiring a treatment time of 5 hours or longer to treat the oxalic acid have been reported.

Accordingly, studies for improving treatment amount and treatment efficiency of a decontamination waste liquid are constantly ongoing.

### [Disclosure]

### [Technical Problem]

The present disclosure has been made in view of the above, and is directed to providing a method for treating a decontamination waste liquid capable of removing non-degradable organic compounds with high efficiency by injecting a semiconductor and dinitrogen tetroxide to a decontamination waste liquid and irradiating radiation.

### [Technical Solution]

One embodiment of the present disclosure provides a method for treating a decontamination waste liquid, the method including irradiating radiation on a decontamination waste liquid in the presence of dinitrogen tetroxide; and a semiconductor.

### [Advantageous Effects]

By using a method for treating a decontamination waste liquid of the present disclosure, a decontamination waste liquid generated during a decontamination process can be treated with excellent efficiency using a simple process, and accordingly, treatment costs can be reduced by improving treatment capacity of the decontamination waste liquid and non-degradable organic compounds can be efficiently decomposed.

In addition, by supplying dinitrogen tetroxide without separately injecting air or high-concentration oxygen, treatment efficiency of non-degradable organic compounds can be maximized.

### [Description of Drawings]

FIG. 1 is a diagram showing treatment efficiency of a decontamination waste liquid according to Example 1.
FIG. 2 is a diagram showing treatment efficiency of a decontamination waste liquid according to Example 2.
FIG. 3 is a diagram showing treatment efficiency of a decontamination waste liquid according to Example 3.

### [Best Mode]

Hereinafter, a method for treating a decontamination waste liquid, the present disclosure, will be described in detail with reference to accompanying drawings so that those skilled in the art readily implement the present disclosure.

One embodiment of the present disclosure provides a method for treating a decontamination waste liquid, the method including irradiating radiation on a decontamination waste liquid in the presence of dinitrogen tetroxide; and a semiconductor.

The decontamination waste liquid represents a waste liquid generated by a decontamination process performed in nuclear decommissioning facilities, radiation (radioactivity) facilities and the like and more specifically includes an organic decontamination agent, and, by irradiating radiation, the organic decontamination agent in the decontamination waste liquid may be decomposed and removed.

The organic decontamination agent may include at least one or more selected from the group consisting of oxalic acid, citric acid, formic acid, picolinic acid, ethylenediamine-N,N,N',N'-tetraacetic acid (EDTA), gluconic acid, acetic acid and sulfamic acid.

The decontamination waste liquid may further include a surfactant. The surfactant may include at least one or more selected from the group consisting of polyoxyethylene alkyl ether, alkyl dimethylamine oxide, fatty acid alkanolamide, alkyl polyglucoside, polyoxyethylene alkyl phenyl ether, dialkyl dimethyl ammonium salt, imidazolium salt, alkyl dimethyl benzyl ammonium salt, alkyl trimethyl ammonium salt, sodium fatty acid, alkylbenzene sulfonate, alpha olefin sulfonate, alkyl sulfuric ester salt, polyoxyethylene alkyl ester sulfate, alkane sulfonate, alpha sulfofatty acid ester salt, alkyl betaine and alkyl sulfobetaine.

The treatment of decontamination waste liquid' may mean reducing a content of the organic decontamination agent in the decontamination waste liquid as above, and ultimately, may also mean reducing a content of the organic decontamination agent in the decontamination waste liquid to about 0%.

The semiconductor may include at least one or more selected from the group consisting of silicon, titanium, vanadium, chromium, manganese, iron, zinc, gallium, germanium, molybdenum, lanthanum, arsenic, indium, antimonide, tellurium and oxides thereof, may preferably include at least one or more selected from the group consisting of titanium oxide, zinc oxide and gallium nitride, and may more preferably include titanium oxide. However, the semiconductor is not necessarily limited thereto, and any may be used as long as it is capable of exciting electrons from a valence band to a conduction band when irradiating energy higher than bandgap energy and capable of forming positive holes in the valence band at the same time.

The semiconductor is a material having a strong oxidation and reduction ability by sunlight, ultraviolet light or the like, and when excited with energy higher than a bandgap, electron-positive hole pairs are generated inside, and when electrons and positive holes generated in this way react with an adsorption material on the semiconductor surface, an oxidation and reduction reaction may occur. Specifically, a reduction reaction by electrons and an oxidation reaction by positive holes may proceed. Accordingly, the semiconductor may sterilize, be antibacterial, decompose, anti-stain, deodorize and collect substances attached to material surfaces, substances in the air and substances in the water, and therefore, may be used for various applications such as cooler filters, glass, tiles, exterior walls, foods, factory interior walls, metal products, water tanks, marine pollution purification, construction materials, mold prevention, ultraviolet protection, water purification, air purification, indoor purification, and prevention of infection in hospitals.

Among the semiconductors, titanium dioxide (TiO₂) is one of the most frequently used semiconductors with advantages of excellent photoactivity, chemical and biological safety, durability, economic feasibilities and the like. Titanium dioxide has a bandgap of about 3.2 eV, and may form electron-positive hole pairs by irradiating light having a wavelength of 380 nm or less.

Titanium dioxide has properties that oxidizing power of positive holes is stronger than reducing power of excited electrons. An energy of the positive holes is, when represented as a potential, about +3 V as a hydrogen-based potential, which is much stronger oxidizing power compared to 1.36 V of chlorine and 2.07 V of ozone used for water treatment.

When irradiating radiation on the semiconductor, the semiconductor becomes excited, which facilitates recombination of formed electrons and positive holes reducing the reaction by electrons in a conduction band or positive holes in a valence band, and by injecting dinitrogen tetroxide to the decontamination waste liquid, electrons generated in the semiconductor after the irradiation of radiation are removed by reacting with the dinitrogen tetroxide, and as a result, recombination of electrons and positive holes is prevented and the decontamination waste liquid may be effectively decomposed.

The dinitrogen tetroxide is a strong oxidizing agent having strong toxicity and corrosiveness, and has a form in which two nitro groups bond. The molecule is linear, and has a N-N bond distance of 1.78 Å and N-O bond distance of 1.19 Å.

When injecting dinitrogen tetroxide to the decontamination waste liquid including the semiconductor and irradiating radiation thereon, electrons excited in the semiconductor by the irradiation of radiation react with the dinitrogen tetroxide to form nitrous acid (HNO₂) as in the following Reaction Formula 1.

[Reaction Formula 1] N₂O₄+2H⁺+2e⁻→2HNO₂

In addition, when irradiating radiation on the dinitrogen tetroxide, the temperature of the decontamination waste liquid including the dinitrogen tetroxide increases to room temperature or higher, and some of the dinitrogen tetroxide may be converted to nitrogen dioxide (NO₂).

The nitrogen dioxide may form radicals and nitrous acid as in the following Reaction Formula 2 to oxidize the organic materials present in the decontamination waste liquid.

[Reaction Formula 2] NO₂+RH→R·+HNO₂

In addition, the nitrogen dioxide may react with water in the decontamination waste liquid as in the following Reaction Formula 3 to form nitric acid (HNO₃) and nitrous acid (HNO₂).

[Reaction Formula 3] 2NO₂+H₂O↔N₂O₄+H₂O→HNO₂+HNO₃

By the irradiation of radiation, the nitrogen dioxide is reduced by reacting with electrons excited in the semiconductor, which may resultantly form nitrogen monoxide (NO), and the nitrogen monoxide may react with water again to form a nitrate (NO₃⁻). The nitrogen monoxide and the nitrate formed as above may react as in the following Reaction Formula 4 to form nitrous acid.

[Reaction Formula 4] NO+NO₃⁻+H₂O→HNO₂+HNO₃

By the nitric acid formed through the reaction, an effect of decomposing the decontamination waste liquid may be additionally obtained.

In other words, the dinitrogen tetroxide reacts with electrons excited in the semiconductor by the irradiation of radiation to prevent recombination of electrons and positive holes in the semiconductor, and the dinitrogen tetroxide reduced by receiving electrons is converted to nitrogen dioxide to participate in the decomposition of the decontamination waste liquid, and by additionally forming nitrous acid and nitric acid from the nitrogen dioxide, decomposition efficiency of the decontamination waste liquid may be enhanced compared to when simply using the semiconductor only.

Meanwhile, the dinitrogen tetroxide may increase the effect of decomposing the decontamination waste liquid by forming additional radicals by the irradiation of radiation. Specifically, the dinitrogen tetroxide may be decomposed to nitrous oxide (N₂O), nitrogen (N₂) and oxygen (O₂) when irradiated with radiation. The nitrous oxide may react with electrons excited in the semiconductor by the irradiation of radiation as in the following Reaction Formula 5 to form hydroxyl radicals (OH·), and the oxygen may react with electrons excited in the semiconductor by the irradiation of radiation as in the following Reaction Formula 6 to form oxygen radicals.

[Reaction Formula 5] N₂O+H₂O+e⁻→2OH·+N₂

[Reaction Formula 6] O₂+e⁻→O₂⁻·

Accordingly, the effect of decontamination waste liquid decomposition may be further enhanced by decomposing the decontamination waste liquid by the radicals formed as above, and preventing recombination of electrons and positive holes in the semiconductor and resulting oxidation by the positive holes in a valence band.

The radiation may include at least one or more ionizing radiations selected from the group consisting of electron beams, alpha rays, beta rays, gamma rays, x-rays and neutron rays, and may preferably include at least one or more ionizing radiations selected from the group consisting of electron beams, gamma rays and x-rays, but is not limited thereto.

By irradiating the radiation, energy having a bandgap of the semiconductor or higher may be applied, and accordingly, electrons may be excited from a valence band to a conduction band to form electron-positive hole pairs in the semiconductor, and the semiconductor may be used for the treatment of the decontamination waste liquid.

The radiation may have an irradiation dose of 5 kGy to 50 kGy, preferably 10 kGy to 50 kGy and more preferably 30 kGy to 50 kGy based on an absorbed dose. When the irradiation of radiation has an irradiation dose greater than the above-mentioned upper limit, there may be damages to the semiconductor crystal, and when the irradiation dose is less than the lower limit, energy exceeding the bandgap of the semiconductor may not be applied, causing a problem of not forming the electron-positive hole pairs.

The method for treating a decontamination waste liquid according to the present disclosure may treat a decontamination waste liquid having a pH of 2 to 13. A decontamination waste liquid generated in nuclear power plants commonly have a pH of 3 or less, and only methods for treating a decontamination waste liquid having a pH of 3 or less have been studied in the art, however, by including the step of irradiating radiation on the decontamination waste liquid in the presence of dinitrogen tetroxide and semiconductor according to the present disclosure, excellent effects are obtained in the decontamination waste liquid treatment without limiting the pH of the decontamination waste liquid. Particularly, excellent treatment efficiency may be obtained with a decontamination waste liquid having a pH of 7 or greater, and accordingly, an advantage of improving a problem of corrosion in the treatment equipment is obtained.

The method for treating a decontamination waste liquid may further include removing an anionic contaminant, which is separating an anionic contaminant in the decontamination waste liquid through an anion exchange membrane using an electrical gradient.

The anionic contaminant may be, for example, a hydrogen carbonate (HCO₃⁻), a carbonate (CO₃²⁻), a nitrite (NO₂⁻), a nitrate (NO₃⁻), a chloride ion (Cl⁻), a sulfate (SO₄²⁻), a phosphate (PO₄³⁻) or the like, but is not limited thereto.

The removing of an anionic contaminant may be performed through a first electrical gradient unit including a first cathode, a first anode and an anion exchange membrane. To the first electrical gradient unit, decontamination waste liquid supply flow path and discharge flow path may be connected.

The decontamination waste liquid supply flow path may be located on the first cathode side to supply the decontamination waste liquid in a direction from the outside of the first electrical gradient unit to the anion exchange membrane. In addition, the decontamination waste liquid discharge flow path may be located on the first cathode side to discharge the decontamination waste liquid, in which the anionic contaminant is removed by passing through the anion exchange membrane and being transferred to the first anode side, out of the first electrical gradient unit.

Specifically, the decontamination waste liquid supply flow path and the decontamination waste liquid discharge flow path are in contact with each other having a diaphragm interposed therebetween, and opposite sides of an inlet of the decontamination waste liquid supply flow path and an outlet of the decontamination waste liquid discharge flow path may all be blocked by the anion exchange membrane in the structure. Accordingly, the decontamination waste liquid inflowing along the decontamination waste liquid supply flow path passes through the first cathode and moves to the anion exchange membrane, and then the anionic contaminant in the decontamination waste liquid is separated through the anion exchange membrane, and the decontamination waste liquid from which the anionic contaminant is separated may be discharged again through the decontamination waste liquid discharge flow path.

Accordingly, the decontamination waste liquid inflowing to the decontamination waste liquid supply flow path flows to the anion exchange membrane, and, when the decontamination waste liquid reaches the anion exchange membrane, may be bent and flow in the decontamination waste liquid discharge flow path direction. Herein, on the anion exchange membrane surface, the anionic contaminant in the decontamination waste liquid may selectively move toward the first anode side.

In addition, the method for treating a decontamination waste liquid may further include removing a cationic contaminant, which is separating a cationic contaminant in the decontamination waste liquid through a cation exchange membrane using an electrical gradient.

The cationic contaminant may be, for example, a lithium ion (Li⁺), a sodium ion (Na⁺), a potassium ion (K⁺), an ammonium ion (NH₄⁺), an iron ion (Fe²⁺), a chromium ion (Cr²⁺), a nickel ion (Ni²⁺), a cesium ion (Cs²⁺) or the like, but is not limited thereto.

The removing of a cationic contaminant may be performed through a second electrical gradient unit. The second electrical gradient unit includes a second anode chamber including a second anode, a second cathode chamber including a second cathode, and a cation exchange membrane. The decontamination waste liquid inflows to the second anode chamber side, passes through the cation exchange membrane to separate the cationic contaminant in the decontamination waste liquid and is discharged to the second cathode chamber side, and the decontamination waste liquid from which the cationic contaminant is separated may be discharged from the second anode chamber side.

The second anode chamber of the second electrical gradient unit is separated from the second cathode chamber with the cation exchange membrane interposed therebetween, and the second anode chamber and the second cathode chamber may be bent while matching with each other.

By such a structure, a constant distance is formed between the second anode and the second cathode of the second electrical gradient unit, and a constant electric field may be formed between the second anode and the second cathode by a voltage applied to the second electrical gradient unit, which is effective in transferring a large amount of the cationic contaminant in the decontamination waste liquid inflowing to the second electrical gradient unit to the second cathode side.

The voltage applied to the second electrical gradient unit may be from 1 V to 50 V, preferably from 5 V to 35 V and more preferably from 10 V to 30 V. When the applied voltage satisfies the above-mentioned numerical range, the cationic contaminant may be separated with high efficiency.

Meanwhile, the method for treating a decontamination waste liquid may be irradiating radiation on the decontamination waste liquid in the additional presence of a transition metal ion.

The transition metal ion may include at least one or more selected from the group consisting of a copper ion, a cobalt ion, a nickel ion, a technetium ion, a ruthenium ion, a rhodium ion, a palladium ion, a silver ion, a cadmium ion, a hafnium ion, a tantalum ion, a tungsten ion, a rhenium ion, an osmium ion, an iridium ion, a platinum ion, a gold ion and a mercury ion, and may preferably include a copper ion.

When irradiating radiation on the decontamination waste liquid in the additional presence of the transition metal ion, the transition metal ion readily reacts with electrons excited in the semiconductor while being oxidized, which is effective in suppressing recombination of electrons and positive holes. For example, when irradiating radiation on the transition metal ion, an oxidized transition metal ion may be formed by losing electrons, and since the oxidized transition metal ion is very likely to be reduced to the state before oxidation, the oxidized transition metal ion readily reacts with electrons excited from the semiconductor irradiated with radiation to suppress recombination of electrons and positive holes, and in addition thereto, the oxidized transition metal ion may directly decompose the decontamination waste liquid.

Hereinafter, the present disclosure will be described more specifically with reference to examples. However, these examples are only to illuminate the present disclosure, and the scope of the present disclosure is not limited to these examples in any sense.

### <Example 1> Identification of pH-Dependent Treatment Efficiency of Decontamination Waste Liquid

An electron beam was used to treat EDTA used as an organic acid and a complexing agent in a nuclear decontamination process, and an irradiation dose of the electron beam was 5 kGy, 10 kGy, 30 kGy and 50 kGy. Concentrations of the EDTA used in Example 1 were each 10 mM, and in order to identify pH-dependent treatment efficiency of the decontamination waste liquid, the pH was adjusted to 3, 5, 7, 9 and 11 using 0.1 N hydrochloric acid and sodium hydroxide.

As a semiconductor, 5 g/L of titanium dioxide was injected, and dinitrogen tetroxide was injected using a method of substituting and dissolving for 30 minutes. A concentration of the dissolved oxygen of the decontamination waste liquid measured without injecting air was 0 ppm.

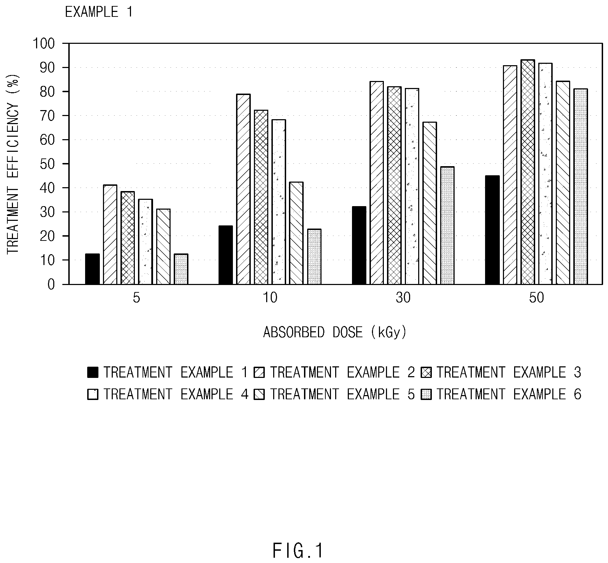

Specifically, the experiments were performed using a batch treated only with an electron beam at pH 7 (Treatment Example 1), a batch in which a decontamination waste liquid (pH 3) to which dinitrogen tetroxide and titanium dioxide were injected was treated with an electron beam (Treatment Example 2), a batch in which a decontamination waste liquid (pH 5) to which dinitrogen tetroxide and titanium dioxide were injected was treated with an electron beam (Treatment Example 3), a batch in which a decontamination waste liquid (pH 7) to which dinitrogen tetroxide and titanium dioxide were injected was treated with an electron beam (Treatment Example 4), a batch in which a decontamination waste liquid (pH 9) to which dinitrogen tetroxide and titanium dioxide were injected was treated with an electron beam (Treatment Example 5) and a batch in which a decontamination waste liquid (pH 11) to which dinitrogen tetroxide and titanium dioxide were injected was treated with an electron beam (Treatment Example 6). Efficiency treatment (%) of the EDTA was calculated by subtracting the EDTA content remaining after the electron beam irradiation from the EDTA content before the electron beam irradiation, and the results are shown in the following Table 1 and FIG. 1.

**[Table 1]**

| Gamma Rays (kGy) | Treatment Efficiency (%) | | | | | |
|---|---|---|---|---|---|---|
| | Treatment Example 1 | Treatment Example 2 | Treatment Example 3 | Treatment Example 4 | Treatment Example 5 | Treatment Example 6 |
| | Electron Beam | N₂O₄+TiO₂₊ pH 3 | N₂O₄+TiO₂ +pH 5 | N₂O₄+TiO₂ +pH 7 | N₂O₄+TiO₂ +pH 9 | N₂O₄+TiO₂ +pH 11 |
| 5 | 12 | 41 | 38 | 35 | 31 | 12 |
| 10 | 14 | 79 | 72 | 68 | 42 | 23 |
| 30 | 32 | 84 | 82 | 81 | 67 | 49 |
| 50 | 45 | 91 | 93 | 92 | 84 | 81 |

It was identified that, when dinitrogen tetroxide and the semiconductor were added to the decontamination waste liquid and radiation was treated thereon, excellent treatment efficiency was obtained regardless of the pH of the decontamination waste liquid.

### <Example 2> Identification of Treatment Efficiency of Decontamination Waste Liquid at pH 2.5

An electron beam was used to treat EDTA used as an organic acid and a complexing agent in a nuclear decontamination process, and an irradiation dose of the electron beam was 5 kGy, 10 kGy, 30 kGy and 50 kGy. Concentrations of the EDTA used in Example 2 were each 10 mM, and after adjusting the pH to be the same at 2.5, treatment efficiency at the corresponding pH was identified. Dinitrogen tetroxide was injected using a method of substituting and dissolving for 30 minutes.

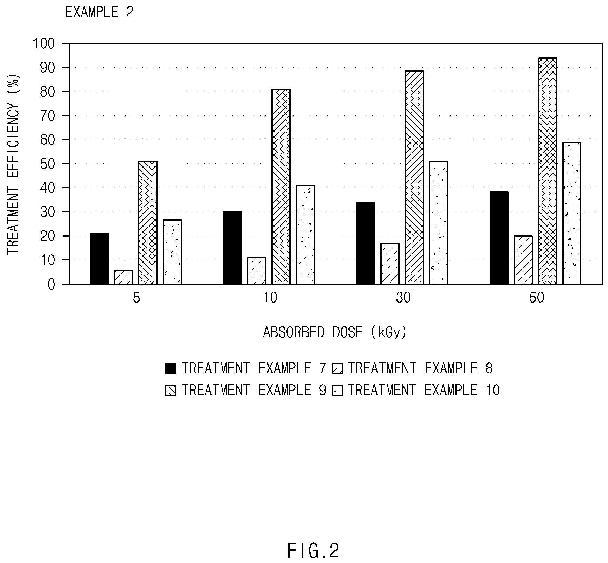

Specifically, the experiments were performed using a batch in which a decontamination waste liquid to which dinitrogen tetroxide was injected was treated with radiation (Treatment Example 7), a batch in which a decontamination waste liquid to which titanium dioxide was injected was treated with radiation (Treatment Example 8) and a batch in which a decontamination waste liquid to which dinitrogen tetroxide and titanium dioxide were injected was treated with radiation (Treatment Example 9). Efficiency treatment (%) of the EDTA was calculated by subtracting the EDTA content remaining after the irradiation of radiation from the EDTA content before the irradiation of radiation, and the results are shown in the following Table 2 and FIG. 2.

In order to identify a synergistic effect obtained by treating dinitrogen tetroxide and the semiconductor together in Treatment Example 9, the sum of treatment efficiencies of Treatment Example 7 and Treatment Example 8 is shown as well in a graph (Treatment Example 10) in FIG. 2.

**[Table 2]**

| Gamma Rays (kGy) | Treatment Efficiency (%) | | | |
|---|---|---|---|---|
| | Treatment Example 7 | Treatment Example 8 | Treatment Example 9 | Treatment Example 10 |
| | N₂O₄ | TiO₂ | N₂O₄+TiO₂ | Treatment Example 7+Treatment Example 8 |
| 5 | 21 | 6 | 51 | 27 |
| 10 | 30 | 11 | 81 | 41 |
| 30 | 34 | 17 | 89 | 51 |
| 50 | 39 | 20 | 94 | 59 |

It was identified that treatment efficiency was improved to be excellent when irradiating radiation after adding both dinitrogen tetroxide and titanium dioxide compared to when irradiating radiation after adding only dinitrogen tetroxide or adding only titanium dioxide. Particularly, it was identified that, regardless of the irradiation dose of the radiation, treatment efficiency when adding both dinitrogen tetroxide and titanium dioxide was significantly superior, exceeding a simple sum of the treatment efficiency of each case in which only one of dinitrogen tetroxide and titanium dioxide was added.

### <Example 3> Identification of Treatment Efficiency of Decontamination Waste Liquid in Additional Presence of Copper Ion after Removing Anionic Contaminant and Cationic Contaminant

In the method for treating a decontamination waste liquid, in order to identify treatment efficiency when additionally injecting a copper ion to the decontamination waste liquid after removing an anionic contaminant and a cationic contaminant, batches with different conditions were prepared as follows while adjusting the decontamination waste liquid including 10 mM EDTA to have the same pH at 2.5, and an electron beam was irradiated at an irradiation dose of 5 kGy, 10 kGy, 30 kGy and 50 kGy. As a semiconductor, 5 g/L of titanium dioxide was used, and dinitrogen tetroxide was injected using a method of substituting and dissolving for 30 minutes.

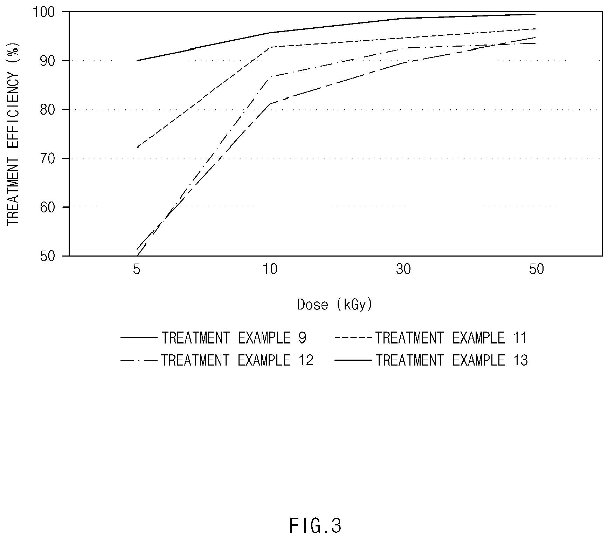

Specifically, for a batch treated with an electron beam after removing an anionic contaminant from a decontamination waste liquid through a first electrical gradient unit and then injecting dinitrogen tetroxide and titanium dioxide to the anionic contaminant-removed decontamination waste liquid (Treatment Example 11), a batch treated with an electron beam after removing a cationic contaminant through a second electrical gradient unit and then injecting dinitrogen tetroxide and titanium dioxide to the cationic contaminant-removed decontamination waste liquid (Treatment Example 12), and a batch treated with an electron beam after removing an anionic contaminant through a first electrical gradient unit and removing a cationic contaminant through a second electrical gradient unit and then injecting dinitrogen tetroxide, titanium dioxide and copper to the anionic and cationic contaminant-removed decontamination waste liquid (Treatment Example 13), efficiency treatment (%) of the EDTA was calculated based on the difference in the EDTA content before and after the electron beam irradiation, and the results are shown in the following Table 3 and FIG. 3. In order to compare the effect resulting from the additional process treatment, the data of Treatment Example 9 are also shown.

The first electrical gradient unit was formed with a first cathode of Ti mesh, an anion exchange membrane and a first anode of IrO₂/Ti mesh, and as the anion exchange membrane, an anion exchange non-woven fabric having micropores of 1 µm was used. With the anion exchange membrane at the center, the first cathode was placed 10 cm away and the first anode was placed 15 cm away. The sizes of the first cathode and the first anode were 7 cm x 7 cm.

As for the second electrical gradient unit, a second anode and a second cathode were placed with a second cation exchange membrane interposed therebetween, and while the second cathode and the second cation exchange membrane were brought into contact with each other, the second anode was placed on an outer wall of the first anode chamber located opposite the second cathode to have a sufficient separation distance with the second cathode. Particularly, the second electrical gradient unit includes a bending portion to increase the area of contact between the decontamination waste liquid and the electrode or the second cation exchange membrane, and specifically, the unit was manufactured in a shape of repeating a U-shape and bending toward the center.

**[Table 3]**

| Gamma Rays (kGy) | Treatment Efficiency (%) | | | |
|---|---|---|---|---|
| | Treatment Example 9 | Treatment Example 11 | Treatment Example 12 | Treatment Example 13 |
| | N₂O₄+TiO₂ | N₂O₄+TiO₂+Anioni c Contaminant Separation | N₂O₄+TiO₂+Cation ic Contaminant Separation | N₂O₄+TiO₂₊Cu+Anionic Contaminant Separation+Cationic Contaminant Separation |
| 5 | 51 | 72 | 50 | 89 |
| 10 | 81 | 92 | 86 | 96 |
| 30 | 89 | 94 | 92 | 98 |
| 50 | 94 | 96 | 98 | 99 |

Compared to Treatment Example 9 in which an electron beam was irradiated after adding both dinitrogen tetroxide and titanium dioxide, Treatment Example 11 in which an electron beam was irradiated after adding both dinitrogen tetroxide and titanium dioxide to the decontamination waste liquid from which the anionic contaminant was separated in advance and Treatment Example 12 in which an electron beam was irradiated after adding both dinitrogen tetroxide and titanium dioxide to the decontamination waste liquid from which the cationic contaminant was separated in advance had excellent treatment efficiency regardless of irradiation intensity of the electron beam.

Particularly, it was identified that Treatment Example 13 in which an electron beam was irradiated after adding copper as well as dinitrogen tetroxide and titanium dioxide to the decontamination waste liquid from which the anionic contaminant and the cationic contaminant were all separated had high removal efficiency of 96% or greater at an irradiation dose of 10 kGy or greater, and had most superior treatment efficiency.

## Claims

1. A method for treating a decontamination waste liquid, the method comprising irradiating radiation on a decontamination waste liquid in a presence of dinitrogen tetroxide; and a semiconductor.

2. The method of Claim 1, wherein the decontamination waste liquid has a pH of 2 to 13.

3. The method of Claim 1, wherein the semiconductor comprises at least one or more selected from the group consisting of silicon, titanium, vanadium, chromium, manganese, iron, zinc, gallium, germanium, molybdenum, lanthanum, arsenic, indium, antimonide, tellurium and oxides thereof.

4. The method of Claim 1, wherein the semiconductor includes at least one or more selected from the group consisting of titanium dioxide, zinc oxide and gallium nitride.

5. The method of Claim 1, wherein the radiation includes at least one or more ionizing radiations selected from the group consisting of electron beams, alpha rays, beta rays, gamma rays, x-rays and neutron rays.

6. The method of Claim 1, wherein an irradiation dose of the irradiation of radiation is from 5 kGy to 50 kGy based on an absorbed dose.

7. The method of Claim 1, wherein the decontamination waste liquid comprises an organic decontamination agent, and the treatment of the decontamination waste liquid comprises removing the organic decontamination agent.

8. The method of Claim 7, wherein the organic decontamination agent comprises at least one or more selected from the group consisting of oxalic acid, citric acid, formic acid, picolinic acid, EDTA, gluconic acid, acetic acid and sulfamic acid.

9. The method of Claim 1, wherein the decontamination waste liquid further comprises a surfactant.

10. The method of Claim 1, further comprising removing an anionic contaminant, which is separating an anionic contaminant in the decontamination waste liquid through an anion exchange membrane using an electrical gradient.

11. The method of Claim 1, further comprising removing a cationic contaminant, which is separating a cationic contaminant in the decontamination waste liquid through a cation exchange membrane using an electrical gradient.

12. The method of Claim 1, which is irradiating radiation on the decontamination waste liquid in an additional presence of a transition metal ion.

13. The method of Claim 12, wherein the transition metal ion includes at least one selected from the group consisting of a copper ion, a cobalt ion, a nickel ion, a technetium ion, a ruthenium ion, a rhodium ion, a palladium ion, a silver ion, a cadmium ion, a hafnium ion, a tantalum ion, a tungsten ion, a rhenium ion, an osmium ion, an iridium ion, a platinum ion, a gold ion and a mercury ion.
